# EUROPEAN PATENT APPLICATION

(11) **EP 3 952 321 A1**
(43) Date of publication of application: **09.02.2022**
(21) Application number: 20777058.7
(22) Date of filing: 26.03.2020
(51) Int. Cl.: H04Q 9/00, G06N 20/00

(54) **DEVICE AND METHOD FOR CONTROLLING APPARATUS INSTALLED INDOORS, AND PROGRAM THEREFOR**

(30) Priority: 27.03.2019 JP 2019060592
(71) Applicant: Data Vehicle Inc., Tokyo 105-0021 (JP)
(72) Inventor: NISHIUCHI, Hiromu, Tokyo 105-0021 (JP)
(74) Representative: Martin, Philip John
(86) International application number: PCT/JP2020/013876
(87) International publication number: WO 2020/196803

(57) **Abstract**

Provided is a device for controlling an apparatus, the device causing the operation of the apparatus to change autonomously. First, a device 100 stores history data when an operation of a switch 110 has been performed by a user. Then, the device 100, after a certain amount of stored history data have been accumulated, performs preprocessing with respect to the history data. Then, using the history data after preprocessing, the device 100 generates a prediction model for predicting the state of the switch 110 at each time or in each time slot by machine learning. Thereafter, the device 100 obtain time data and environment data, and predicts a state of the switch 110 on the basis of the prediction model. In order to match the predicted state, the device 100 causes a relay 103 to operate to turn on or off a lighting fixture 120. When the user operates the switch 110 and the state of the switch 110 has become inconsistent with the state predicted by the prediction model, the device 100 regenerates a prediction model automatically.

## Description

### TECHNICAL FIELD

The present invention relates to a device and method for controlling an apparatus installed indoors, and a program therefor.

### BACKGROUND ART

In the age of IoT, where various apparatuses are connected to the Internet, this trend is spreading to home appliances as well. For example, it is possible to install a gateway at home that can be wirelessly connected to the Internet via Wi Fi (registered trademark), and send instructions to control air conditioning equipment to the gateway from a smartphone when you are out. The gateway receives the instructions and sends a control signal to the air conditioning equipment using infrared rays, for example. Furthermore, when the homeowner is at home, it is possible to link a smart speaker to an air-conditioning apparatus or other apparatus and control that apparatus by giving instructions to the smart speaker using voice. The concept of a "smart home," which utilizes such communication technology to enhance the comfort of the home, has been attracting attention.

### SUMMARY OF INVENTION

### TECHNICAL PROBLEM

However, there are many apparatuses installed in each house, and if all of them are individually controlled by the user's operation or voice, it is complicated and does not necessarily improve comfort.

This problem is not limited to private residences, but also applies to apparatuses installed indoors in offices, factories, and other indoor locations. For factories, it is desirable to improve productivity through the use of communication technology.

The objective of the present invention is to autonomously change the operation of an apparatus in a device, method and program for controlling the apparatus installed indoors.

Although the present invention causes autonomous changes in the operation of an apparatus, it does not exclude that the operation of the apparatus can be changed by the user's operation or voice.

### SOLUTION TO PROBLEM

In order to achieve such an objective, the first aspect of the present invention is a method for controlling an apparatus installed indoors, comprising: when a user makes an input for changing a state of on or off of the apparatus, storing history data including a content of the input, a time or time slot of the input, and a status of surrounding environment of the apparatus when the input was made; after a certain number pieces of the historical data have been accumulated, preprocessing the historical data; based on the historical data after the preprocessing, generating a prediction model to predict a state of on or off of the apparatus at each time or time slot; changing the apparatus to a state predicted by the prediction model; and automatically regenerating a prediction model on a condition that a predetermined event occurs after the generation of the prediction model.

The second aspect of the present invention is the method of the first aspect, wherein the apparatus is a lighting fixture.

The third aspect of the present invention is the method of the second aspect, wherein the status of the surrounding environment includes at least one of volume and brightness.

The fourth aspect of the present invention is the method of any one of the first to the third aspects, wherein the preprocessing includes converting the time contained in each piece of historical data, that is an object of the preprocessing, into a time slot separated by a certain unit.

The fifth aspect of the present invention is the method of the fourth aspect, wherein the time slot includes a day of the week.

The sixth aspect of the present invention is the method of any one of the first to the third aspects, wherein the preprocessing includes calculating an elapsed time from a previous piece of the history data for each piece of the history data that is an object of the preprocessing.

The seventh aspect of the present invention is the method of any one of the first to the sixth aspects, wherein the generation of the prediction model is performed by random forest based on the historical data after the preprocessing.

The eighth aspect of the present invention is the method of any one of the first to the seventh aspects, the event is an additional input by the user to change the state of on or off of the apparatus.

The ninth aspect of the present invention a program for causing a computer to perform a method for controlling an apparatus installed indoors, comprising: when a user makes an input for changing a state of on or off of the apparatus, storing history data including a content of the input, a time or time slot of the input, and a status of surrounding environment of the apparatus when the input was made; after a certain number pieces of the historical data have been accumulated, preprocessing the historical data; based on the historical data after the preprocessing, generating a prediction model to predict a state of on or off of the apparatus at each time or time slot; changing the apparatus to a state predicted by the prediction model; and automatically regenerating a prediction model on a condition that a predetermined event occurs after the generation of the prediction model.

The tenth aspect of the present invention is a device for controlling an apparatus installed indoors, configured to: when a user makes an input for changing a state of on or off of the apparatus, store history data including a content of the input, a time or time slot of the input, and a status of surrounding environment of the apparatus when the input was made; after a certain number pieces of the historical data have been accumulated, preprocess the historical data; based on the historical data after the preprocessing, predict a state of on or off of the apparatus at each time or time slot; change the apparatus to a state predicted by the prediction model; and automatically regenerate a prediction model on a condition that a predetermined event occurs after the generation of the prediction model.

According to an aspect of the present invention, the device 100 generates a prediction model using the historical data generated by the user's input for changing the state of on or off of the apparatus 120 as teacher data, and automatically regenerates the prediction model on the condition that an event occurs after the prediction model is generated. As the device 100 is installed, the apparatus 120 adapts to the behavior of each user and changes its operation autonomously.

### BRIEF DESCRIPTION OF DRAWINGS

FIG. 1 shows the device according to the first embodiment of the present invention.

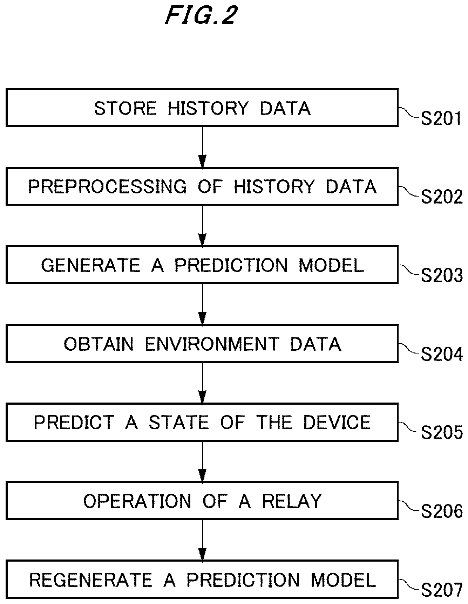

FIG. 2 shows the flow of the method according to the first embodiment of the invention.
FIG. 3A shows the importance of the prediction model in Example 1.
FIG. 3B shows the importance of the prediction model in Example 1.
FIG. 4A shows the importance of the prediction model in Example 2.
FIG. 4B shows the importance of the prediction model in Example 2.
FIG. 5A shows the importance of the prediction model in Example 3.
FIG. 5B shows the importance of the prediction model in Example 3.
FIG. 6A shows the importance of the prediction model in Example 4.
FIG. 6B shows the importance of the prediction model in Example 4.
FIG. 7A shows the importance of the prediction model in Example 5.
FIG. 7B shows the importance of the prediction model in Example 5.
FIG. 8 shows the device according to the second embodiment of the present invention.

### DESCRIPTION OF EMBODIMENTS

The embodiments of the invention are described in detail below.

### (First embodiment)

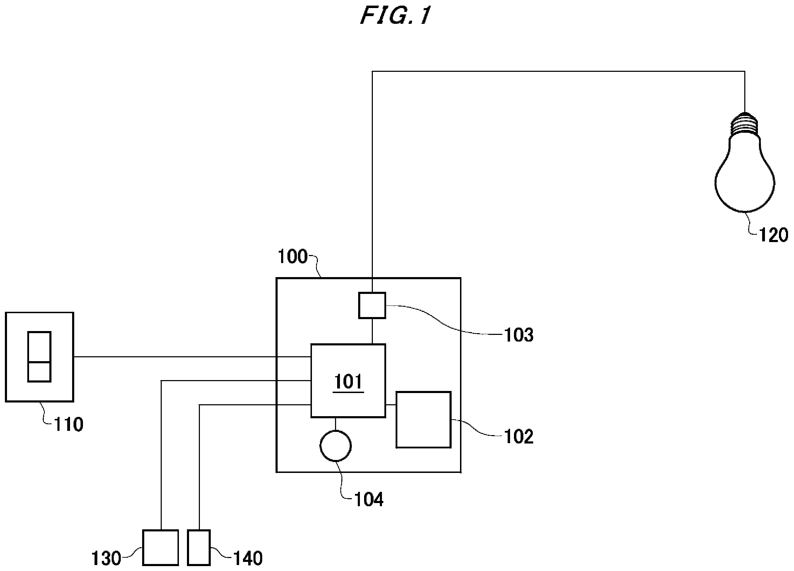

FIG. 1 shows a device according to the first embodiment. The device 100 controls the operation of a lighting fixture 120 which is switched on and off by a switch 110. Where a typical lighting fixture 120 has a relay placed between it and the switch 110, and the on or off of the switch 110 is conveyed to the lighting fixture 120 by the relay, in the present embodiment, the device 100 replaces the relay.

The device 100 comprises a processing unit 101 such as a processor, CPU, GPU, etc., a storage unit 102 including a storage device or medium such as a hard disk, and a relay 103. The processing unit 101 reads from the storage unit 102 and executes a program to perform each of the processes described below. The device 100 further comprises a communication unit (not shown), such as a communication interface, and may be connected to a computer network to enable acquisition of the current time. In the example of FIG. 1, it comprises an internal clock 104. The device 100 does not necessarily collaborate with other devices, in which case the need for precise time setting, such as synchronization using a computer network, is not high. The program to be executed by the processing unit 101 may include one or more programs, and may also be recorded on a computer-readable storage medium to form a non-transitory program product.

The device 100 or its processing unit 101 is directly or indirectly connected to the switch 110, detects the operation made on the switch 110, and causes the relay 103 to operate accordingly to turn on or off the light fixture 120. The device 100 or its processing unit 101 maybe directly or indirectly connected to a sound sensor 130 and a light sensor 140 to continuously or as needed detect the volume and brightness of the surrounding environment.

The processing unit 101 and the storage unit 102 may be provided on a single chip. The sound sensor 130 and the light sensor 140 may also be considered to be included in the device 100, and furthermore, these sensors may be provided on the same chip as at least one of the processing unit 101 and the storage unit 102. More specifically, a combination of the various components described here may be configured as a single chip computer.

The device 100 according to this embodiment stores data concerning the surrounding environment when the switch 110 is operated by the user (hereinafter referred to as "environmental data") for a certain period of time together with time data. The device 100 itself generates a prediction model that predicts the state of on or off of the switch 110 at each time by machine learning based on these pieces of data. Then, the device 100 or its processing unit 101 operates the relay 103 to turn on or off the lighting fixture 120 in response to the state predicted by the prediction model. After the generation of the prediction model, the prediction model is updated by automatically regenerating the prediction model on the condition that a predetermined event occurs. In this way, the device 100 changes the operation of the apparatus 120 autonomously. This is described in detail below.

First, the device 100 or the processing unit 101 thereof, when the switch 110 is operated by the user, stores the content of the switch 110 on or off, the time or time slot when the operation on the switch 110 was performed, and the status of the surrounding environment of the apparatus 120 when the operation on the switch 110 was performed (hereinafter collectively referred to as "history data") in the device 100 or its storage unit 102 for a certain period of time (S201).

Next, the device 100 or its processing unit 101 performs pre-processing on the historical data after a certain number pieces of historical data stored in the device 100 or its storage unit 102 have been accumulated (S202). For time data, the time of each history data is converted into a time slot separated by a certain unit such as 30 minutes or 1 hour. In addition, the elapsed time from the previous piece of history data is calculated. Each time or time slot may include a day of the week, which represents the day of the week the time or time slot pertains to. For environmental data, the raw data of volume or brightness may also be converted to a range of volume or brightness separated by a certain unit.

Then, using the historical data after preprocessing, the device 100 or its processing unit 101 generates a prediction model that predicts the state of on or off of the switch 110 at each time or time slot by machine learning (S203). The machine learning can be performed by ensemble learning, for example, random forest. In the case of using random forest, the user only needs to install the device 100 and operate the switch 110 a certain number of times to start using it, since the prediction model can be generated without making a hypothesis as to which of the features obtained by preprocessing will contribute to correct prediction. In addition to ensemble learning, other machine learning methods such as neural network (NN), generalized linear model, support vector machine (SVM), decision trees, naive Bayes, K-nearest neighbor method, etc. may be used to generate a predictive model.

It is desirable that the prediction model be generated at the edge, so to speak, without communicating with a server on a computer network such as the Internet. This is because the speed of the communication line becomes a bottleneck and a time lag may occur in real time processing. In particular, when the invention is used indoors in a factory, edge computing is preferable because control may be impossible in the event of a network failure.

Thereafter, the device 100 or the processing unit 101 thereof obtains time data and environmental data continuously, periodically, or intermittently (S204), and predicts the state of the switch 110 based on the prediction model (S205). The generated prediction model is preferably stored in the memory of the processing unit 101.

To match the predicted state, the device 100 or its processing unit 101 operates the relay 103 to turn on or off the lighting fixture 120 (S206). Specifically, the device 100 or its processing unit 101 operates the relay 103 to energize the lighting fixture 120 when the lighting fixture 120 is to be turned on.

If the user operates the switch 110 and the state of the switch 110 becomes inconsistent with the state predicted by the prediction model, that is, if the prediction result of the prediction model is not the state desired by the user at that time or time slot, the device 100 or the processing unit 101 thereof stores the history data at the time of the operation by the user and automatically regenerate the prediction model based on the predetermined number pieces of historical data including the historical data (S207). In other words, after the generation of the prediction model, the prediction model is updated subject to the occurrence of an event, namely an additional input to change the state of on or off of the apparatus 120, and the operation by the user is autonomously reflected in subsequent predictions. Here, pre-processing of historical data is also performed as necessary during regeneration, as described above. In addition to the case where regeneration is performed using all the historical data in the past, there is also a case where regeneration is performed using historical data up to a certain number of pieces or a certain number of elapsed days or elapsed hours in the past.

As described above, the device 100 according to the present embodiment generates a prediction model in the device 100 itself using the historical data generated by the user's input to change the state of the apparatus 120 to on or off as the teacher data, and also automatically regenerates the prediction model on the condition that an event occurs after the prediction model is generated. As the device 100 is installed, the apparatus 120 adapts to the behavior of each user and changes its behavior autonomously.

The device 100 can be installed by externally adding the device 100 to the apparatus 120, and in this way, a number of devices in a room can be made intelligent in a simple manner, but this does not necessarily exclude integration into the apparatus 120.

In this embodiment, we have given an example of using two sensors, sound sensor 130 and light 140, but it is also possible to use at least one sensor. Also, although the switch 110 is illustrated in FIG. 1 as being wired to the device 100, it may receive input wirelessly. Also, in this embodiment, the processing unit 101 operates the relay 103, and the relay 103 is described as energizing the apparatus 120. However, if the state of on or off of the apparatus 120 can be changed, the intervening apparatus between the processing unit 101 and the apparatus 120 operated by the processing unit 101 is not limited to the relay 103.

In the above embodiments, it is to be noted that if the term "only" is not written, such as in "based only on x", "in response to x only", or "in case of x only", in the present specification, it is assumed that additional information may also be taken into account. Also, as an example, it is to be noted that a description "b is performed in case of a" does not necessarily mean "b is always performed in case of a" or "a is performed immediately after a" except where expressly stated. In particular, note that the phrase "control in case of a" does not necessarily mean "always control in case of a", but assumes that exceptional or additional processing may be performed.

In addition, as a caveat, even if there are characteristics of a method, a program, a terminal, an apparatus, a server or a system (hereinafter referred to as "method, etc.") that perform operations different from those described herein, each aspect of the invention is intended to perform the same operation as one of the operations described herein, and the existence of an operation different from those described herein does not mean that the method, etc. is outside the scope of each aspect of the invention.

It should also be added that although the above description describes the device 100 as autonomously operating an indoor apparatus, it may be applicable to an outdoor apparatus.

In the following examples, the prediction accuracy varies depending on the data set used by the device 100 or its processing unit 101 to generate the prediction model. Specifically, the data set of Example 5 achieves particularly high accuracy and is highly effective. However, it can be said that the accuracies of all the data sets shown below are beneficial in reducing the trouble of requiring user operation each time.

### Example 1

On November 11, 2018, at 6:30 p.m., the device 100 according to the present embodiment was installed between the light fixture 120 in the inventor's residence and the switch 110 for turning it on or off, and the switch 110 was turned on. A high-sensitivity audio sensor using a microphone included in SunFounder's Sensor Kit V1.0 for Raspberry Pi (trademark) was used as the sound sensor 130, and a photoresistor included in the same kit was used as the light sensor 140 and connected to the device 100. The volume and brightness were measured via A/D converter ADC0832, respectively. The resolution of the ADC0832 is 8 bits, and it takes values from 0 to 255 for both volume and brightness. The company's Raspberry Pi 3 MODEL B was used as the computer to configure the device 100. The switch 110 was then turned on or off according to the inventor's lifestyle. The time, brightness, and volume were stored in the storage unit 102 until 22:50 on November 19, 2019, along with the on flag, which was set to 1 for on and 0 for off. The stored historical data is shown in Table 1-1.

**Table 1 - 1**

| id | time | on flag | brightness | volume | | memo |
|---|---|---|---|---|---|---|
| 0 | 2018/11/11 18:30 | 1 | 38 | 29 | Sun | Initial switch on after connecting the device |
| 1 | 2018/11/11 22:12 | 0 | 27 | 23 | | Switch off for sleep |
| 2 | 2018/11/12 7:10 | 1 | 75 | 17 | Mon | Switch on after wakeup |
| 3 | 2018/11/12 8:15 | 0 | 89 | 39 | | Swtich off for departure |
| 4 | 2018/11/12 19:10 | 1 | 32 | 24 | | Switch on after returning home |
| 5 | 2018/11/12 22:50 | 0 | 34 | 26 | | Switch off for sleep |
| 6 | 2018/11/13 6:50 | 1 | 57 | 14 | Tue | Switch on after wakeup earlier than usual |
| 7 | 2018/11/13 8:10 | 0 | 71 | 22 | | Swtich off for departure |
| 8 | 2018/11/13 22:40 | 1 | 33 | 21 | | Switch on after returning home a little late than usual |
| 9 | 2018/11/13 23:30 | 0 | 30 | 16 | | Switch off for sleep a little late than usual |
| 10 | 2018/11/14 7:20 | 1 | 82 | 15 | Wed | Switch on after wakeup |
| 11 | 2018/11/14 8:13 | 0 | 94 | 57 | | Swtich off for departure |
| 12 | 2018/11/14 18:20 | 1 | 47 | 11 | | Switch on after returning home a little early without overtime |
| 13 | 2018/11/14 22:22 | 0 | 26 | 25 | | Switch off for sleep |
| 14 | 2018/11/15 7:05 | 1 | 71 | 20 | Thu | Switch on after wakeup |
| 15 | 2018/11/15 8:15 | 0 | 83 | 57 | | Swtich off for departure |
| 16 | 2018/11/15 19:10 | 1 | 33 | 8 | | Switch on after returning home |
| 17 | 2018/11/15 22:50 | 0 | 16 | 25 | | Switch off for sleep |
| 18 | 2018/11/16 7:05 | 1 | 65 | 16 | Fri | Switch on after wakeup |
| 19 | 2018/11/16 8:15 | 0 | 79 | 55 | | Swtich off for departure |
| 20 | 2018/11/16 23:40 | 1 | 35 | 15 | | Switch on after returning home late |
| 21 | 2018/11/17 0:10 | 0 | 20 | 15 | | Switch off for sleep |
| 22 | 2018/11/17 9:23 | 1 | 97 | 11 | Sat | Switch on after waking up late |
| 23 | 2018/11/17 11:23 | 0 | 104 | 22 | | Swith off while staying home since it became bright outside |
| 24 | 2018/11/17 17:15 | 1 | 53 | 17 | | Swith on while staying home since it became dark outside |
| 25 | 2018/11/17 22:30 | 0 | 30 | 28 | | Switch off for sleep |
| 26 | 2018/11/18 8:40 | 1 | 86 | 6 | Sun | Switch on after waking up late |
| 27 | 2018/11/18 10:38 | 0 | 98 | 12 | | Swtich off for departure |
| 28 | 2018/11/18 17:15 | 1 | 31 | 24 | | Swith on while staying home since it became dark outside |
| 29 | 2018/11/18 22:30 | 0 | 53 | 36 | | Switch off for sleep |
| 30 | 2018/11/19 7:06 | 1 | 48 | 14 | Mon | Switch on after wakeup |
| 31 | 2018/11/19 8:12 | 0 | 54 | 24 | | Swtich off for departure |
| 32 | 2018/11/19 19:10 | 1 | 21 | 27 | | Switch on after returning home |
| 33 | 2018/11/19 22:50 | 0 | 44 | 30 | | Switch off for sleep |

Without counting the first piece of historical data as the starting time of the elapsed time, after five pieces of historical data were accumulated, the device 100 generated a prediction model by machine learning based on these pieces of historical data. This was done by counting the number of accumulated pieces of historical data when storing them in the storage unit 102 and programming to start machine learning when the predetermined five is reached.

The machine learning algorithm was Random Forest, and more specifically, the RandomForestClassifier library in scitit-learn, a Python machine learning tool. As a preprocessing step, the time of each piece of historical data was converted to the time range of 0 am to 23 pm. For each piece of historical data, the elapsed time since the previous piece of historical data was calculated in logarithm. Although logarithms were used here, this is not necessarily necessary. The brightness, volume, elapsed time, day of the week, and time slot obtained in this way were used as features to perform machine learning.

In this example, in order to verify the accuracy of the prediction, we continued to store the historical data from the user operation even after the prediction model was generated, and separately evaluated the prediction as incorrect when the state of on or off predicted by the prediction model was different from the state by the user operation. Then, the prediction model was regenerated based on the historical data up to that point, and subsequent predictions were made. The prediction results of the prediction model obtained in this way are shown in Table 1-2.

**Table 1 - 2**

| id | time | on flag | brightness | volume | predicted value | result |
|---|---|---|---|---|---|---|
| 6 | 2018/11/13 6:50 | 1 | 57 | 14 | 1 | success |
| 7 | 2018/11/13 8:10 | 0 | 71 | 22 | 0 | success |
| 8 | 2018/11/13 22:40 | 1 | 33 | 21 | 0 | accidentally off |
| 9 | 2018/11/13 23:30 | 0 | 30 | 16 | 0 | success |
| 10 | 2018/11/14 7:20 | 1 | 82 | 15 | 1 | success |
| 11 | 2018/11/14 8:13 | 0 | 94 | 57 | 0 | success |
| 12 | 2018/11/14 18:20 | 1 | 47 | 11 | 1 | success |
| 13 | 2018/11/14 22:22 | 0 | 26 | 25 | 0 | success |
| 14 | 2018/11/15 7:05 | 1 | 71 | 20 | 1 | success |
| 15 | 2018/11/15 8:15 | 0 | 83 | 57 | 0 | success |
| 16 | 2018/11/15 19:10 | 1 | 33 | 8 | 1 | success |
| 17 | 2018/11/15 22:50 | 0 | 16 | 25 | 0 | success |
| 18 | 2018/11/16 7:05 | 1 | 65 | 16 | 1 | success |
| 19 | 2018/11/16 8:15 | 0 | 79 | 55 | 0 | success |
| 20 | 2018/11/16 23:40 | 1 | 35 | 15 | 0 | accidentally off |
| 21 | 2018/11/17 0:10 | 0 | 20 | 15 | 0 | success |
| 22 | 2018/11/17 9:23 | 1 | 97 | 11 | 1 | success |
| 23 | 2018/11/17 11:23 | 0 | 104 | 22 | 0 | success |
| 24 | 2018/11/17 17:15 | 1 | 53 | 17 | 1 | success |
| 25 | 2018/11/17 22:30 | 0 | 30 | 28 | 1 | accidentally on |
| 26 | 2018/11/18 8:40 | 1 | 86 | 6 | 1 | success |
| 27 | 2018/11/18 10:38 | 0 | 98 | 12 | 0 | success |
| 28 | 2018/11/18 17:15 | 1 | 31 | 24 | 1 | success |
| 29 | 2018/11/18 22:30 | 0 | 53 | 36 | 0 | success |
| 30 | 2018/11/19 7:06 | 1 | 48 | 14 | 1 | success |
| 31 | 2018/11/19 8:12 | 0 | 54 | 24 | 0 | success |
| 32 | 2018/11/19 19:10 | 1 | 21 | 27 | 0 | accidentally off |
| 33 | 2018/11/19 22:50 | 0 | 44 | 30 | 0 | success |

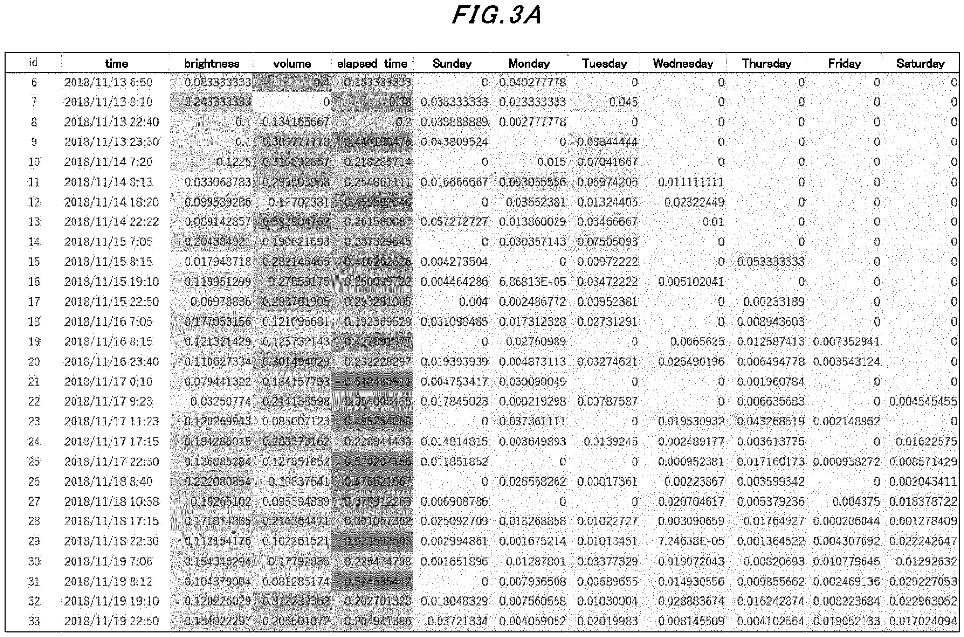

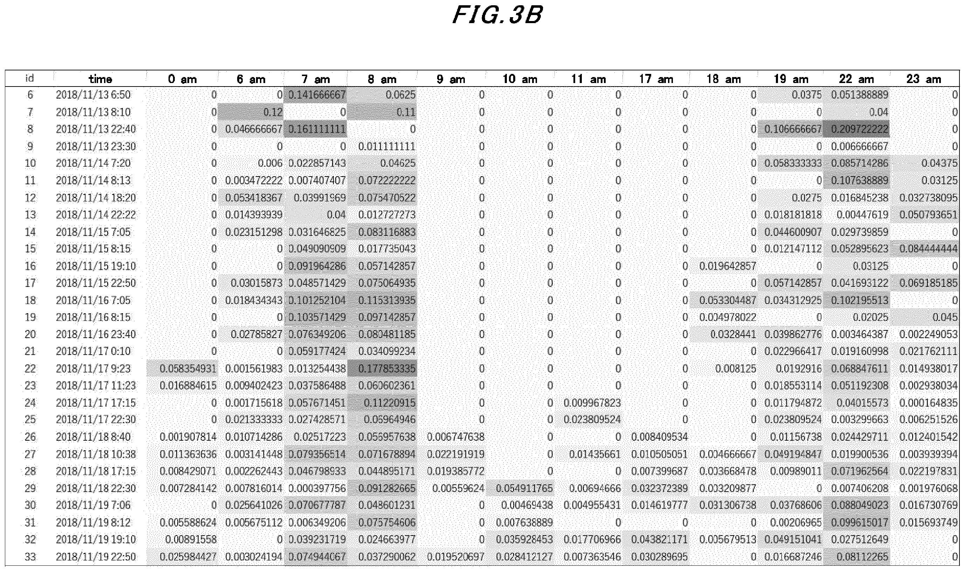

In the prediction model generated by the random forest, the importance of each feature (Gini importance) is used as a parameter to indicate how much the accuracy improves when a prediction is made using each feature. The calculated importance of each feature is shown in FIG. 3A and FIG. 3B. Features with higher importance are colored darker.

In Example 1, the success rate of prediction is 85.7%, which means high accuracy is achieved.

### Example 2

In Example 2, of the brightness, volume, elapsed time, day of the week, and time slot obtained from the historical data, the prediction model was generated using only the brightness, day of the week, and time slot as features. The prediction results of the prediction model thus obtained are shown in Table 2.

**Table 2**

| id | time | on flag | brightness | predicted value | result |
|---|---|---|---|---|---|
| 6 | 2018/11/13 6:50 | 1 | 57 | 0 | accidentally off |
| 7 | 2018/11/13 8:10 | 0 | 71 | 0 | success |
| 8 | 2018/11/13 22:40 | 1 | 33 | 0 | accidentally off |
| 9 | 2018/11/13 23:30 | 0 | 30 | 1 | accidentally on |
| 10 | 2018/11/14 7:20 | 1 | 82 | 1 | success |
| 11 | 2018/11/14 8:13 | 0 | 94 | 0 | success |
| 12 | 2018/11/14 18:20 | 1 | 47 | 1 | success |
| 13 | 2018/11/14 22:22 | 0 | 26 | 0 | success |
| 14 | 2018/11/15 7:05 | 1 | 71 | 1 | success |
| 15 | 2018/11/15 8:15 | 0 | 83 | 0 | success |
| 16 | 2018/11/15 19:10 | 1 | 33 | 1 | success |
| 17 | 2018/11/15 22:50 | 0 | 16 | 1 | accidentally on |
| 18 | 2018/11/16 7:05 | 1 | 65 | 1 | success |
| 19 | 2018/11/16 8:15 | 0 | 79 | 0 | success |
| 20 | 2018/11/16 23:40 | 1 | 35 | 0 | accidentally off |
| 21 | 2018/11/17 0:10 | 0 | 20 | 0 | success |
| 22 | 2018/11/17 9:23 | 1 | 97 | 0 | accidentally off |
| 23 | 2018/11/17 11:23 | 0 | 104 | 1 | accidentally on |
| 24 | 2018/11/17 17:15 | 1 | 53 | 0 | accidentally off |
| 25 | 2018/11/17 22:30 | 0 | 30 | 0 | success |
| 26 | 2018/11/18 8:40 | 1 | 86 | 0 | accidentally off |
| 27 | 2018/11/18 10:38 | 0 | 98 | 1 | accidentally on |
| 28 | 2018/11/18 17:15 | 1 | 31 | 1 | success |
| 29 | 2018/11/18 22:30 | 0 | 53 | 0 | success |
| 30 | 2018/11/19 7:06 | 1 | 48 | 1 | success |
| 31 | 2018/11/19 8:12 | 0 | 54 | 0 | success |
| 32 | 2018/11/19 19:10 | 1 | 21 | 0 | accidentally off |
| 33 | 2018/11/19 22:50 | 0 | 44 | 0 | success |

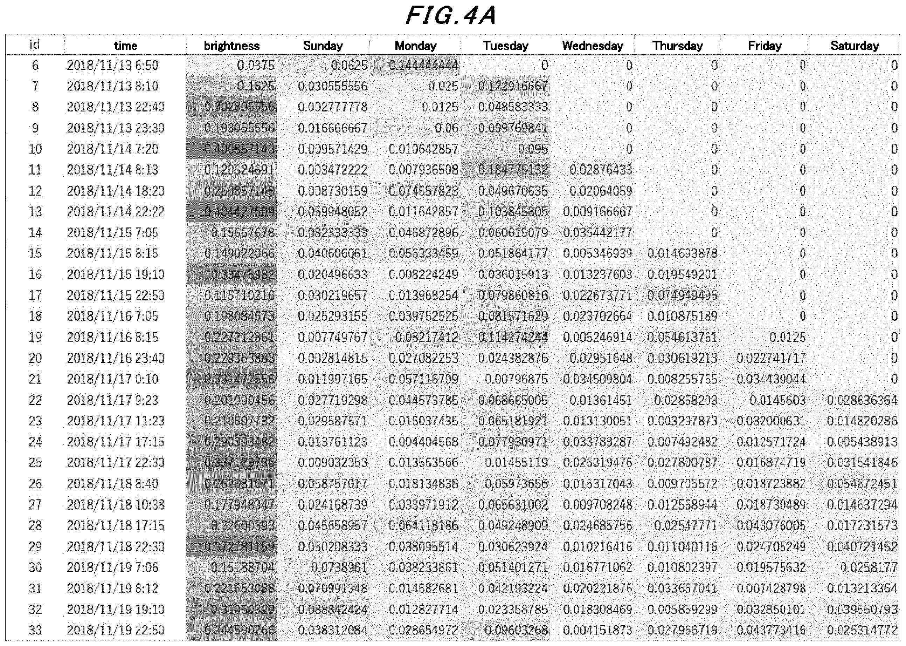

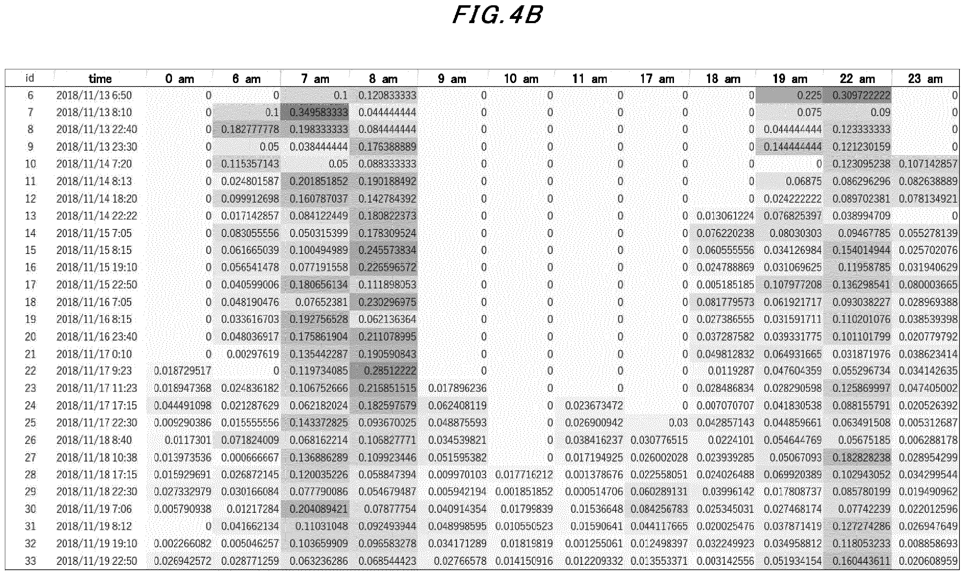

The importance of each feature is shown in FIG. 4A and FIG. 4B. Features with higher importance are colored darker. The time slots in which the importance value is zero for all pieces of historical data are excluded from FIG. 4B.

In Example 2, the success rate of prediction is 60.7%, which shows a certain level of prediction accuracy.

### Example 3

In Example 3, of the brightness, volume, elapsed time, day of the week, and time slot obtained from the historical data, the prediction model was generated using only the volume, day of the week, and time slot as features. The prediction results of the prediction model thus obtained are shown in Table 3.

**Table 3**

| id | time | on flag | volume | predicted value | result |
|---|---|---|---|---|---|
| 6 | 2018/11/13 6:50 | 1 | 14 | 1 | success |
| 7 | 2018/11/13 8:10 | 0 | 22 | 0 | success |
| 8 | 2018/11/13 22:40 | 1 | 21 | 0 | accidentally off |
| 9 | 2018/11/13 23:30 | 0 | 16 | 1 | accidentally on |
| 10 | 2018/11/14 7:20 | 1 | 15 | 1 | success |
| 11 | 2018/11/14 8:13 | 0 | 57 | 0 | success |
| 12 | 2018/11/14 18:20 | 1 | 11 | 1 | success |
| 13 | 2018/11/14 22:22 | 0 | 25 | 0 | success |
| 14 | 2018/11/15 7:05 | 1 | 20 | 1 | success |
| 15 | 2018/11/15 8:15 | 0 | 57 | 0 | success |
| 16 | 2018/11/15 19:10 | 1 | 8 | 1 | success |
| 17 | 2018/11/15 22:50 | 0 | 25 | 0 | success |
| 18 | 2018/11/16 7:05 | 1 | 16 | 1 | success |
| 19 | 2018/11/16 8:15 | 0 | 55 | 0 | success |
| 20 | 2018/11/16 23:40 | 1 | 15 | 1 | success |
| 21 | 2018/11/17 0:10 | 0 | 15 | 1 | accidentally on |
| 22 | 2018/11/17 9:23 | 1 | 11 | 0 | accidentally off |
| 23 | 2018/11/17 11:23 | 0 | 22 | 0 | success |
| 24 | 2018/11/17 17:15 | 1 | 17 | 0 | accidentally off |
| 25 | 2018/11/17 22:30 | 0 | 28 | 0 | success |
| 26 | 2018/11/18 8:40 | 1 | 6 | 0 | accidentally off |
| 27 | 2018/11/18 10:38 | 0 | 12 | 1 | accidentally on |
| 28 | 2018/11/18 17:15 | 1 | 24 | 1 | success |
| 29 | 2018/11/18 22:30 | 0 | 36 | 0 | success |
| 30 | 2018/11/19 7:06 | 1 | 14 | 1 | success |
| 31 | 2018/11/19 8:12 | 0 | 24 | 0 | success |
| 32 | 2018/11/19 19:10 | 1 | 27 | 1 | success |
| 33 | 2018/11/19 22:50 | 0 | 30 | 0 | success |

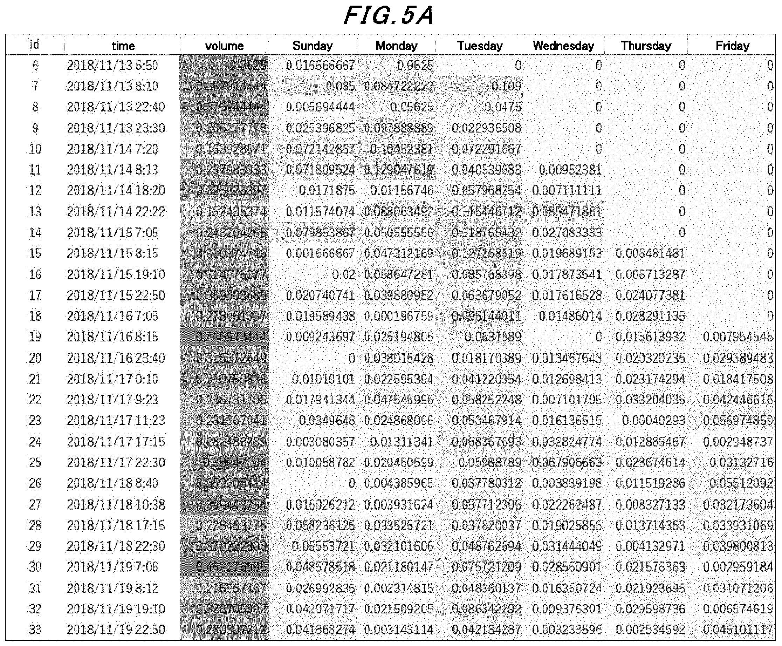

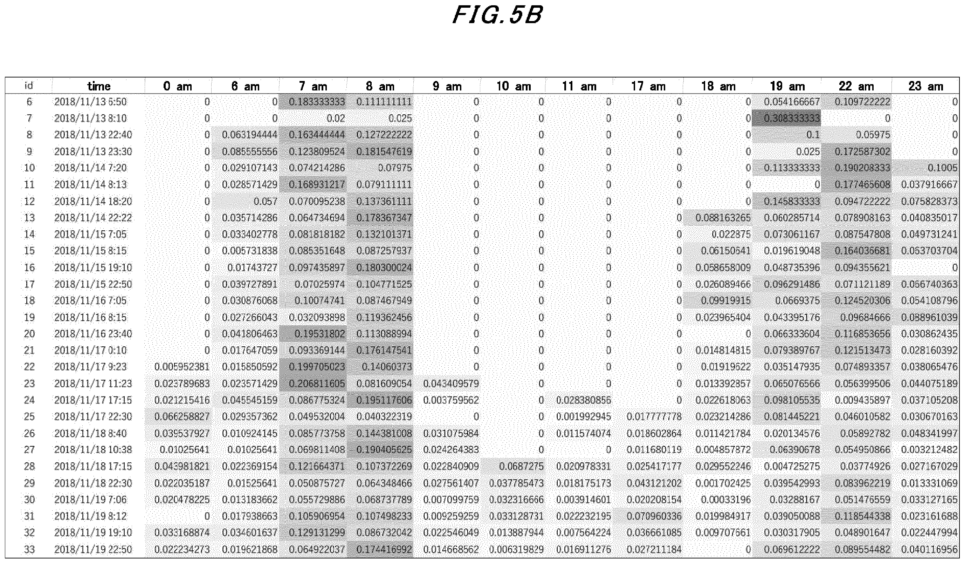

The importance of each feature is shown in FIG. 5A and FIG. 5B. Features with higher importance are colored darker. The time slots in which the importance value is zero for all pieces of historical data are excluded from FIG. 5B.

In Example 3, the success rate of prediction is 75.0%, and a certain prediction accuracy is obtained.

### Example 4

In Example 4, among the brightness, volume, elapsed time, day of the week, and time slot obtained from the historical data, the prediction model was generated using only the brightness, elapsed time, day of the week, and time slot as features. The prediction results of the prediction model thus obtained are shown in Table 4.

**Table 4**

| id | time | on flag | brightness | predicted value | result |
|---|---|---|---|---|---|
| 6 | 2018/11/13 6:50 | 1 | 57 | 1 | success |
| 7 | 2018/11/13 8:10 | 0 | 71 | 0 | success |
| 8 | 2018/11/13 22:40 | 1 | 33 | 0 | accidentally off |
| 9 | 2018/11/13 23:30 | 0 | 30 | 0 | success |
| 10 | 2018/11/14 7:20 | 1 | 82 | 1 | success |
| 11 | 2018/11/14 8:13 | 0 | 94 | 0 | success |
| 12 | 2018/11/14 18:20 | 1 | 47 | 1 | success |
| 13 | 2018/11/14 22:22 | 0 | 26 | 0 | success |
| 14 | 2018/11/15 7:05 | 1 | 71 | 1 | success |
| 15 | 2018/11/15 8:15 | 0 | 83 | 0 | success |
| 16 | 2018/11/15 19:10 | 1 | 33 | 1 | success |
| 17 | 2018/11/15 22:50 | 0 | 16 | 0 | success |
| 18 | 2018/11/16 7:05 | 1 | 65 | 1 | success |
| 19 | 2018/11/16 8:15 | 0 | 79 | 0 | success |
| 20 | 2018/11/16 23:40 | 1 | 35 | 0 | accidentally off |
| 21 | 2018/11/17 0:10 | 0 | 20 | 0 | success |
| 22 | 2018/11/17 9:23 | 1 | 97 | 1 | success |
| 23 | 2018/11/17 11:23 | 0 | 104 | 0 | success |
| 24 | 2018/11/17 17:15 | 1 | 53 | 1 | success |
| 25 | 2018/11/17 22:30 | 0 | 30 | 0 | success |
| 26 | 2018/11/18 8:40 | 1 | 86 | 0 | accidentally off |
| 27 | 2018/11/18 10:38 | 0 | 98 | 0 | success |
| 28 | 2018/11/18 17:15 | 1 | 31 | 1 | success |
| 29 | 2018/11/18 22:30 | 0 | 53 | 1 | accidentally on |
| 30 | 2018/11/19 7:06 | 1 | 48 | 1 | success |
| 31 | 2018/11/19 8:12 | 0 | 54 | 0 | success |
| 32 | 2018/11/19 19:10 | 1 | 21 | 1 | success |
| 33 | 2018/11/19 22:50 | 0 | 44 | 0 | success |

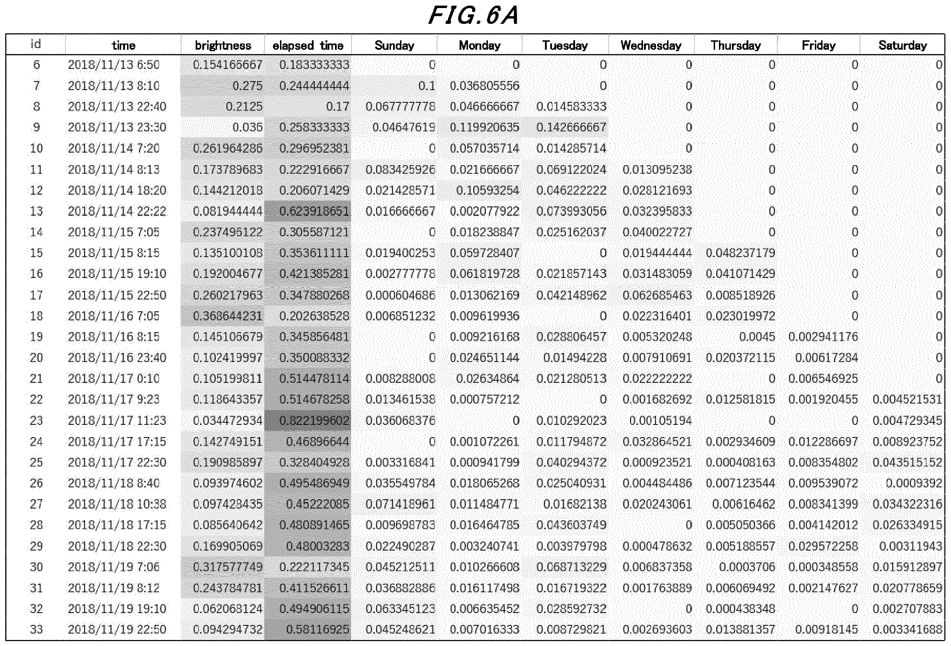

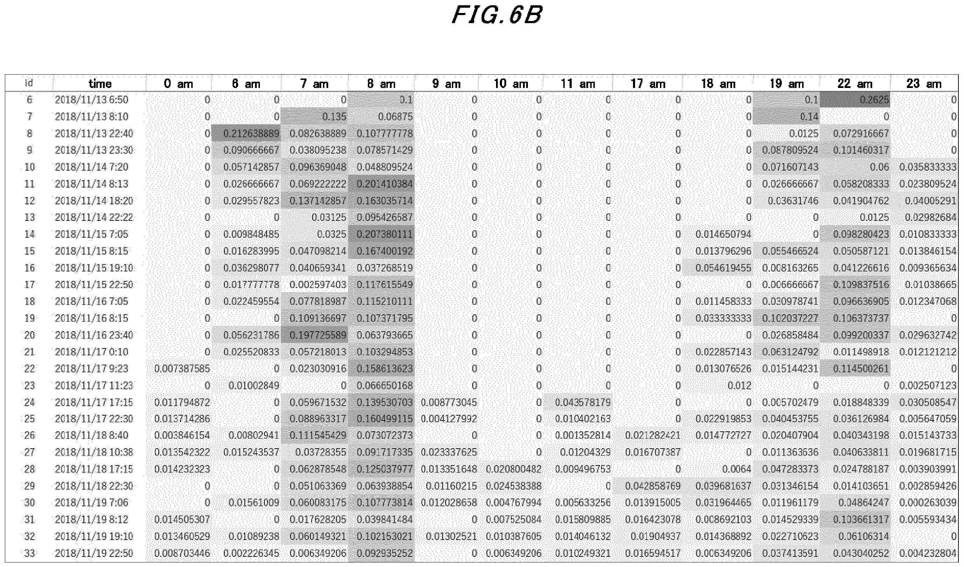

The importance of each feature is shown in FIG. 6A and FIG. 6B. The features with higher importance are colored darker. The time slots in which the importance value is zero for all pieces of historical data are excluded from FIG. 6B.

In Example 4, the success rate of prediction was 85.7%, indicating high prediction accuracy.

### Example 5

In Example 5, among the brightness, volume, elapsed time, day of the week, and time slot obtained from the historical data, the prediction model was generated using only the volume, elapsed time, day of the week, and time slot as features. The prediction results of the prediction model thus obtained are shown in Table 5.

**Table 5**

| id | time | on flag | volume | predicted value | result |
|---|---|---|---|---|---|
| 6 | 2018/11/13 6:50 | 1 | 14 | 1 | success |
| 7 | 2018/11/13 8:10 | 0 | 22 | 0 | success |
| 8 | 2018/11/13 22:40 | 1 | 21 | 0 | accidentally off |
| 9 | 2018/11/13 23:30 | 0 | 16 | 1 | accidentally on |
| 10 | 2018/11/14 7:20 | 1 | 15 | 1 | success |
| 11 | 2018/11/14 8:13 | 0 | 57 | 0 | success |
| 12 | 2018/11/14 18:20 | 1 | 11 | 1 | success |
| 13 | 2018/11/14 22:22 | 0 | 25 | 0 | success |
| 14 | 2018/11/15 7:05 | 1 | 20 | 1 | success |
| 15 | 2018/11/15 8:15 | 0 | 57 | 0 | success |
| 16 | 2018/11/15 19:10 | 1 | 8 | 1 | success |
| 17 | 2018/11/15 22:50 | 0 | 25 | 0 | success |
| 18 | 2018/11/16 7:05 | 1 | 16 | 1 | success |
| 19 | 2018/11/16 8:15 | 0 | 55 | 0 | success |
| 20 | 2018/11/16 23:40 | 1 | 15 | 1 | success |
| 21 | 2018/11/17 0:10 | 0 | 15 | 0 | success |
| 22 | 2018/11/17 9:23 | 1 | 11 | 1 | success |
| 23 | 2018/11/17 11:23 | 0 | 22 | 0 | success |
| 24 | 2018/11/17 17:15 | 1 | 17 | 1 | success |
| 25 | 2018/11/17 22:30 | 0 | 28 | 0 | success |
| 26 | 2018/11/18 8:40 | 1 | 6 | 1 | success |
| 27 | 2018/11/18 10:38 | 0 | 12 | 0 | success |
| 28 | 2018/11/18 17:15 | 1 | 24 | 1 | success |
| 29 | 2018/11/18 22:30 | 0 | 36 | 0 | success |
| 30 | 2018/11/19 7:06 | 1 | 14 | 1 | success |
| 31 | 2018/11/19 8:12 | 0 | 24 | 0 | success |
| 32 | 2018/11/19 19:10 | 1 | 27 | 1 | success |
| 33 | 2018/11/19 22:50 | 0 | 30 | 0 | success |

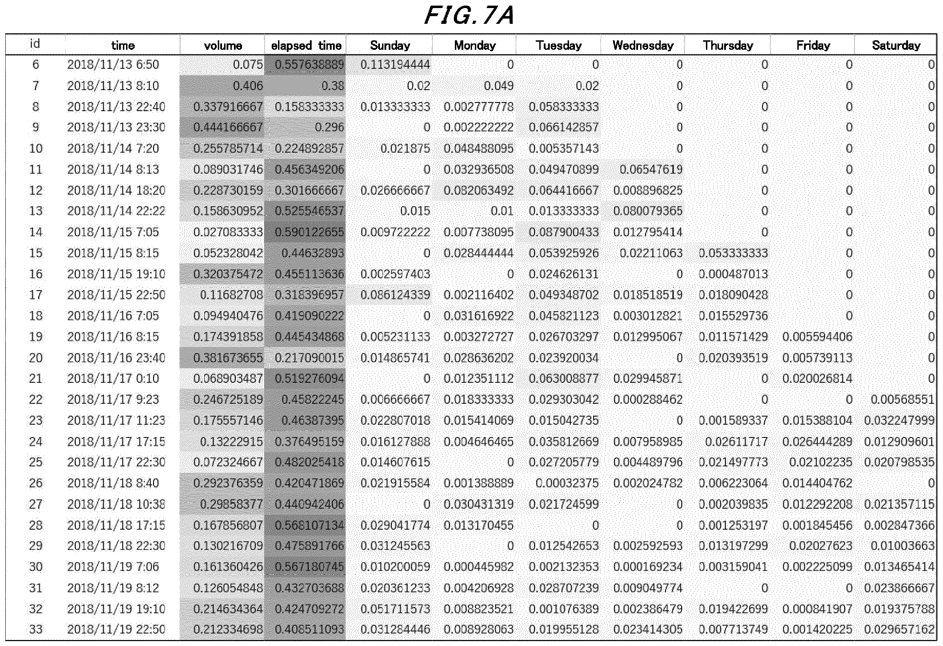

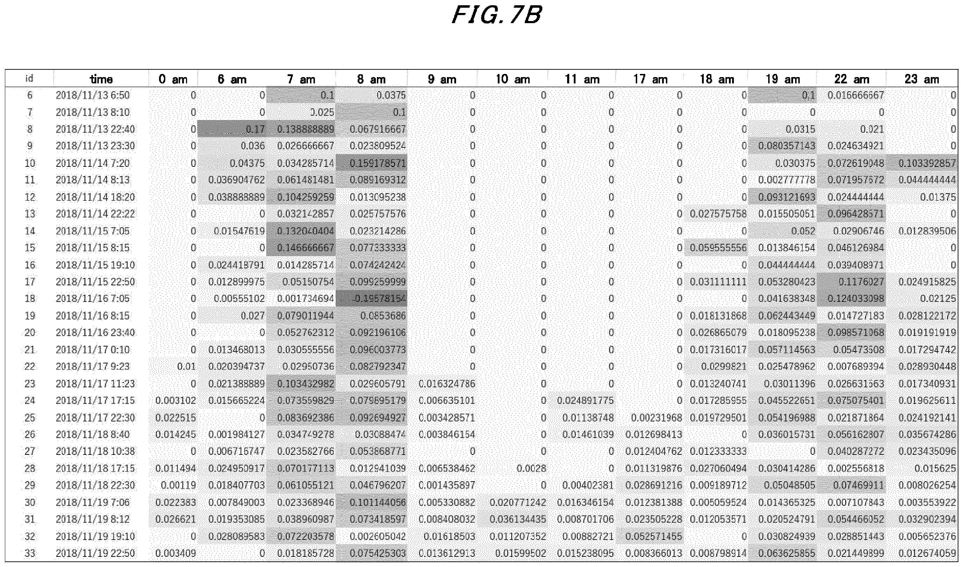

The importance of each feature is shown in FIG. 7A and FIG. 7B. Features with higher importance are colored darker. The time slots in which the importance value is zero for all pieces of historical data are excluded from FIG. 7B.

In Example 5, the success rate of prediction was 92.9%, which indicates extremely high prediction accuracy.

### (Second embodiment)

In the first embodiment, the device 100 is described as being installed between the switch 110 and the apparatus 120, but in the second embodiment, the device 800 is installed between the socket 810 and the apparatus 820.

The apparatus 820 has a power plug 821 and is normally used by inserting it into the socket 810. When using the device 800, first, the power plug 805 of the device 800 is inserted into the socket 810 to fix it. Then, the power plug 821 of the apparatus 820 into the socket 806 of the device 800. In this state, when the wireless communication unit 807, such as a communication interface, receives an input to change the state of on or off of the apparatus 820 wirelessly from a wireless device (not shown) such as a smartphone, smart speaker, or remote controller, the processing unit 801 operates the relay 803 to energize the apparatus 820.

Although the device 800 differs from the device 100 according to the first embodiment in that it receives user input at the wireless communication unit 807 instead of the switch 110, the device 800 performs the same processing with respect to the processing unit 801, storage unit 802, relay 803, internal clock 804, sound sensor 830, and light sensor 840.

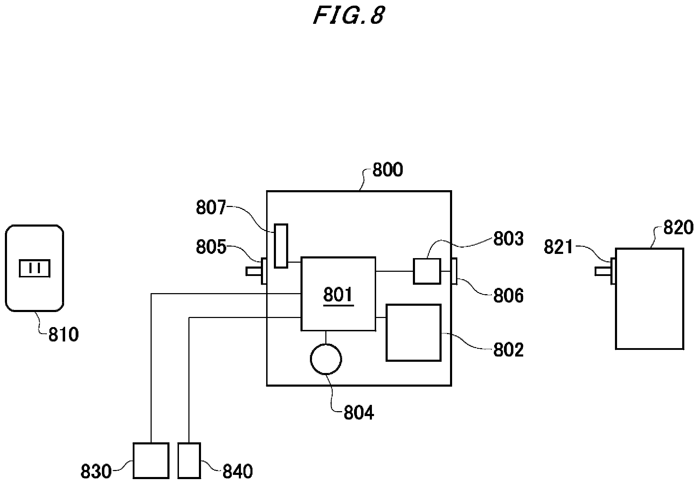

The wireless communication unit 807 does not necessarily need to be capable of communicating with a server on a computer network such as the Internet, but should be able to receive user input wirelessly in a room. In the example of FIG. 8, the apparatus 820 is wired to be controlled by the device 800 by inserting its power plug 821 into the socket 806 of the device 800, but the device 800 may be able to control the apparatus 820 wirelessly by infrared rays or other means.

It should be added that the various variants described for the first embodiment of the device 100 are equally possible for the second embodiment.

### REFERENCE SIGNS LIST

- 100: device
- 101: processor
- 102: storage unit
- 103: relay
- 104: built-in clock
- 110: switch
- 120: lighting fixture
- 130: sound sensor
- 140: optical sensor
- 800: device
- 801: processor
- 802: storage unit
- 803: relay
- 804: built-in clock
- 805: power plug
- 806: socket
- 807: wireless communication unit
- 810: socket
- 820: apparatus
- 821: power plug

## Claims

1. A method for controlling an apparatus installed indoors, comprising:
when a user makes an input for changing a state of on or off of the apparatus, storing history data including a content of the input, a time or time slot of the input, and a status of surrounding environment of the apparatus when the input was made,
after a certain number pieces of the historical data have been accumulated, preprocessing the historical data,
based on the historical data after the preprocessing, generating a prediction model to predict a state of on or off of the apparatus at each time or time slot,
changing the apparatus to a state predicted by the prediction model, and
automatically regenerating a prediction model on a condition that a predetermined event occurs after the generation of the prediction model.

2. The method according to claim 1, wherein the apparatus is a lighting fixture.

3. The method according to claim 2, wherein the status of the surrounding environment includes at least one of volume and brightness.

4. The method according to any one of claims 1 to 3, wherein the preprocessing includes converting the time contained in each piece of historical data, that is an object of the preprocessing, into a time slot separated by a certain unit.

5. The method according to claim 4, wherein the time slot includes a day of the week.

6. The method according to any one of claims 1 to 3, wherein the preprocessing includes calculating an elapsed time from a previous piece of the history data for each piece of the history data that is an object of the preprocessing.

7. The method according to any one of claims 1 to 6, wherein the generation of the prediction model is performed by random forest based on the historical data after the preprocessing.

8. The method according to any one of claims 1 to 7, the event is an additional input by the user to change the state of on or off of the apparatus.

9. A program for causing a computer to perform a method for controlling an apparatus installed indoors, comprising:
when a user makes an input for changing a state of on or off of the apparatus, storing history data including a content of the input, a time or time slot of the input, and a status of surrounding environment of the apparatus when the input was made,
after a certain number pieces of the historical data have been accumulated, preprocessing the historical data,
based on the historical data after the preprocessing, generating a prediction model to predict a state of on or off of the apparatus at each time or time slot,
changing the apparatus to a state predicted by the prediction model, and
automatically regenerating a prediction model on a condition that a predetermined event occurs after the generation of the prediction model.

10. A device for controlling an apparatus installed indoors, configured to:
when a user makes an input for changing a state of on or off of the apparatus, store history data including a content of the input, a time or time slot of the input, and a status of surrounding environment of the apparatus when the input was made,
after a certain number pieces of the historical data have been accumulated, preprocess the historical data,
based on the historical data after the preprocessing, predict a state of on or off of the apparatus at each time or time slot,
change the apparatus to a state predicted by the prediction model, and
automatically regenerate a prediction model on a condition that a predetermined event occurs after the generation of the prediction model.
